# EUROPEAN PATENT APPLICATION

(11) **EP 4 210 207 A1**
(43) Date of publication of application: **12.07.2023**
(21) Application number: 21877426.3
(22) Date of filing: 28.09.2021
(51) Int. Cl.: H02K 15/04, H02K 15/12

(54) **METHOD FOR MANUFACTURING STATOR**

(30) Priority: 07.10.2020 JP 2020170168; 15.12.2020 JP 2020207986
(71) Applicant: AISIN CORPORATION, Kariya-shi, Aichi 448-8650 (JP)
(72) Inventor: ISHIKAWA, Masahiro, Kariya-shi, Aichi 448-8650 (JP); YABUI, Hiroaki, Kariya-shi, Aichi 448-8650 (JP); SATO, Koji, Kariya-shi, Aichi 448-8650 (JP); HOSHINO, Akinori, Kariya-shi, Aichi 448-8650 (JP)
(74) Representative: Kramer Barske Schmidtchen Patentanwälte PartG mbB
(86) International application number: PCT/JP2021/035730
(87) International publication number: WO 2022/075125

(57) **Abstract**

This method for manufacturing a stator includes, after a cross section forming step for forming a sectional shape of a coil portion by compressing the coil portion and a coating step for applying an insulation coating to the coil portion, a common heat treatment step for performing, by the same heat treatment, annealing of the coil portion whose sectional shape has been formed in the cross section forming step and baking of the insulation coating applied to the coil portion in the coating step.

## Description

### TECHNICAL FIELD

The present invention relates to a method for manufacturing a stator.

### BACKGROUND ART

Hitherto, there is known a stator in which the sectional shape of a coil portion is formed. Such a stator is disclosed, for example, in Japanese Unexamined Patent Application Publication No. 2006-340409 (JP 2006-340409 A).

JP 2006-340409 A discloses a stator including a stator core and a coil disposed on the stator core and having a rectangular cross section. In the stator described in JP 2006-340409 A, an insulation coating is formed around the coil.

### Related Art Documents

### Patent Documents

Patent Document 1: Japanese Unexamined Patent Application Publication No. 2006-340409 (JP 2006-340409 A)

### SUMMARY OF THE INVENTION

### Problem to be Solved by the Invention

Although description is not given in JP 2006-340409 A, the coil may be formed under compression by rolling or the like to form the coil into a desired sectional shape as described in JP 2006-340409 A. In this case, annealing may be performed after the coil is compressed to remove a residual stress (work hardening) inside the coil due to the compression. Although description is not given in JP 2006-340409 A, in order to form the insulation coating around the coil as described in JP 2006-340409 A, the insulation coating may be baked after the insulation coating is applied to the coil. That is, in a case where the related-art stator manufacturing method includes the step of forming the coil (coil portion) under compression and the step of applying the insulation coating to the coil, the step of annealing the coil and the step of baking the insulation coating applied to the coil are further needed. Therefore, the number of steps relatively increases. In view of this, there is a demand for a stator manufacturing method that can prevent the number of steps from relatively increasing even in the case where the method includes the step of forming the coil portion under compression and the step of applying the insulation coating to the coil portion.

The present invention has been made to solve the above problem, and one object of the present invention is to provide the stator manufacturing method that can prevent the number of steps from relatively increasing even in the case where the method includes the step of forming the coil portion under compression and the step of applying the insulation coating to the coil portion.

### Means for Solving the Problem

In order to achieve the above object, a method for manufacturing a stator according to one aspect of the present invention is a method for manufacturing a stator including a stator core and a coil portion disposed in the stator core. The method includes a cross section forming step for forming a sectional shape of the coil portion by compressing the coil portion, a coating step for applying an insulation coating to the coil portion, a common heat treatment step for performing, after the cross section forming step and the coating step, by the same heat treatment, annealing of the coil portion whose sectional shape has been formed in the cross section forming step and baking of the insulation coating applied to the coil portion in the coating step, and a disposing step for disposing the coil portion in the stator core after the common heat treatment step.

As described above, the method for manufacturing the stator according to the one aspect of the present invention includes, after the cross section forming step and the coating step, the common heat treatment step for performing both the annealing of the coil portion whose sectional shape has been formed in the cross section forming step and the baking of the insulation coating applied to the coil portion in the coating step. Thus, the annealing of the coil portion whose sectional shape has been formed in the cross section forming step and the baking of the insulation coating applied to the coil portion in the coating step can simultaneously be performed by the same heat treatment in the single common heat treatment step. As a result, it is possible to prevent the number of steps from relatively increasing even in the case where the method includes the step of forming the coil portion under compression (cross section forming step) and the step of applying the insulation coating to the coil portion (coating step). Unlike a case where the annealing of the coil portion and the baking of the insulation coating are separately performed by separate heat treatments, a common heating apparatus can be used for performing the heat treatment. Thus, the manufacturing equipment can be prevented from becoming complicated and upsized.

### Effects of the Invention

According to the present invention, as described above, it is possible to prevent the number of steps from relatively increasing even in the case where the method includes the step of forming the coil portion under compression and the step of applying the insulation coating to the coil portion.

### BRIEF DESCRIPTION OF THE DRAWINGS

[FIG. 1] FIG. 1 is a plan view showing the configuration of a rotary electric machine according to an embodiment.
[FIG. 2] FIG. 2 is a perspective view of a stator according to the embodiment when viewed from a radially inner side.
[FIG. 3] FIG. 3 is a partially enlarged plan view showing the configuration of a slot of the stator according to the embodiment.
[FIG. 4] FIG. 4 is a perspective view showing the configuration of a segment conductor of the stator according to the embodiment.
[FIG. 5] FIG. 5 is a plan view showing the configuration of the sectional shape of the segment conductor of the stator according to the embodiment (FIG. 5A is a sectional view (taken along a line 300-300 in FIG. 4) of one slot housing portion, FIG. 5B is a sectional view (taken along a line 400-400 in FIG. 4) of the other slot housing portion, and FIG. 5C is a sectional view (taken along a line 500-500 in FIG. 4) of a coil end portion).
[FIG. 6] FIG. 6 is a partially enlarged sectional view showing the configuration of the coil end portions of the segment conductors of the stator according to the embodiment.
[FIG. 7] FIG. 7 is a flowchart showing a method for manufacturing the stator according to the embodiment.
[FIG. 8] FIG. 8 is a flowchart showing a method for manufacturing the stator according to a modification of the embodiment.
[FIG. 9] FIG. 9 is a flowchart showing a method for manufacturing the stator according to a comparative example.

### MODES FOR CARRYING OUT THE INVENTION

Hereinafter, an embodiment of the present invention will be described with reference to the drawings.

### [Configuration of Stator]

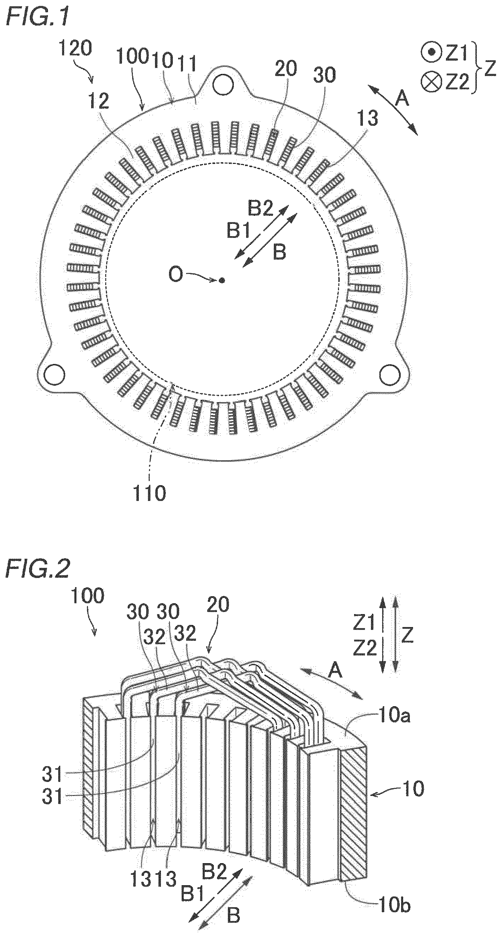

First, the configuration of a stator 100 according to the embodiment will be described with reference to FIGS. 1 to 6.

In the following description, an "axial direction" means a direction (Z direction) along a rotational axis (symbol O) of a stator core 10 (see FIG. 1). A "circumferential direction" means a circumferential direction (A direction) of the stator core 10. A "radial direction" means a radial direction (B direction) of the stator core 10. One side and the other side in the axial direction (Z direction) of the stator core 10 are defined as a Z1 side and a Z2 side, respectively. One side (radially inner side) and the other side (radially outer side) in the radial direction (B direction) of the stator core 10 are defined as a B1 side and a B2 side, respectively.

As shown in FIG. 1, a rotary electric machine 120 includes the stator 100 and a rotor 110. The stator 100 includes the stator core 10 and a coil portion 20. For example, the rotary electric machine 120 is a motor, a generator, or a motor generator. The rotor 110 is disposed on the B1 side of the stator 100 such that the outer peripheral surface of the rotor 110 and the inner peripheral surface of the stator 100 face each other in the radial direction. That is, the stator 100 is structured as a part of the rotary electric machine 120 of an inner rotor type.

The stator core 10 has a cylindrical shape with its central axis being the central axis O along the Z direction. The stator core 10 is formed by stacking a plurality of electromagnetic steel sheets (for example, silicon steel sheets) in the Z direction.

The stator core 10 includes an annular back yoke 11, a plurality of teeth 12 protruding from the back yoke 11 to the B1 side, and a plurality of slots 13 formed between the teeth 12 adjacent to each other in the A direction. As shown in FIG. 2, the plurality of slots 13 is provided so as to extend in the axial direction of the stator core 10.

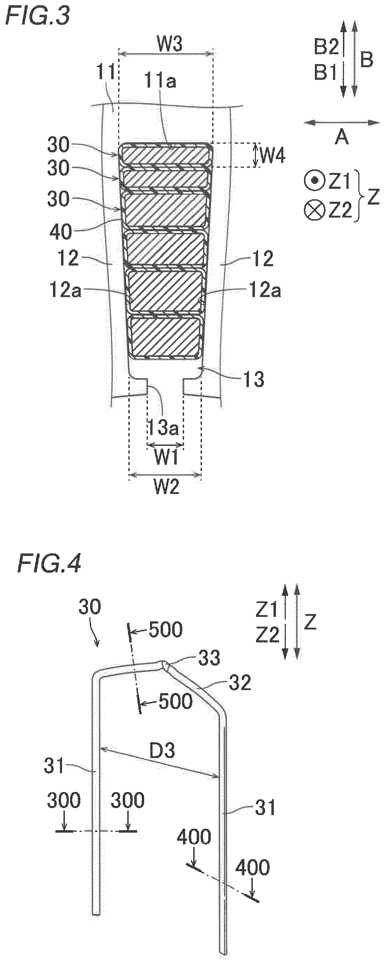

As shown in FIG. 1, the coil portion 20 includes a plurality of segment conductors 30. The plurality of segment conductors 30 is joined together. Specifically, the end of a slot housing portion 31 described later (see FIG. 4) in the segment conductor 30 disposed on the Z1 side and the end of a slot housing portion 31 in the segment conductor 30 disposed on the Z2 side are joined together in the slot 13. As shown in FIG. 3, the sectional shape of the segment conductor 30 is a rectangular shape. That is, the segment conductor 30 is a rectangular conductor. The segment conductor 30 is made of copper. The segment conductor 30 may be made of aluminum. The segment conductor 30 is an example of a "coil portion" in the claims.

As shown in FIG. 2, the plurality of segment conductors 30 is disposed across the plurality of slots 13. Specifically, each of the plurality of segment conductors 30 includes a pair of slot housing portions 31 (see FIG. 4) housed (inserted) in different slots 13. A plurality of slots 13 is provided between the slots 13 in which the pair of slot housing portions 31 is housed. Each of the plurality of segment conductors 30 includes a coil end portion 32 connected to the slot housing portions 31. That is, the coil end portion 32 connects the pair of slot housing portions 31. Thus, the segment conductor 30 has a substantial U-shape when viewed in the radial direction (see FIG. 4).

The coil end portions 32 are provided outside the stator core 10 in the axial direction. Specifically, the coil end portions 32 protrude from an end face 10a of the stator core 10 on the Z1 direction side in the axial direction and an end face 10b of the stator core 10 on the Z2 direction side in the axial direction.

As shown in FIG. 3, the slot 13 is a portion surrounded by a wall portion 11a of the back yoke 11 provided on the radially outer side and circumferential side surfaces 12a of two teeth 12. The slot 13 has an opening 13a that is open to the radially inner side. The slot 13 is also open to both sides in the axial direction.

The opening 13a has an opening width W1 in the circumferential direction. The opening width W1 is smaller than a circumferential width W2 of a part of the slot 13 where the coil portion 20 is disposed. That is, the slot 13 is structured as a semi-open slot. The width W2 of the slot 13 varies depending on radial positions. Specifically, the width W2 increases toward the radially outer side.

A plurality of (six in FIG. 3) slot housing portions 31 is arranged in the slot 13 in the radial direction. A circumferential width W3 of the slot housing portion 31 in the slot 13 is larger for the slot housing portion 31 on the radially outer side in conformity with the shape of the slot 13. The sectional areas of the slot housing portions 31 in the slot 13 are equal to each other. Therefore, a radial width W4 of the slot housing portion 31 in the slot 13 is smaller for the slot housing portion 31 on the radially outer side.

The segment conductor 30 is covered (coated) with an insulation coating 40 provided for insulation. The insulation coating 40 is made of an insulating material such as a thermosetting resin.

As shown in FIG. 4, the coil end portion 32 includes a crank part 33 having a crank shape that is bent stepwise for the width of one segment conductor 30 in the radial direction when viewed in the axial direction. That is, the radial width of the crank part 33 is twice the width of one segment conductor 30.

As a result, one and the other of the pair of slot housing portions 31 are disposed at different radial positions (lanes). For example, one of the pair of slot housing portions 31 is disposed in a first radially inner lane (innermost lane) of the slot 13, and the other of the pair of slot housing portions 31 is disposed in a second radially inner lane (second lane from the inner side) of the slot 13 that is different from the lane of the one of the pair of slot housing portions 31. In this manner, the segment conductor 30 (coil portion 20) is disposed in the stator core 10 such that one and the other of the pair of slot housing portions 31 are disposed in the lanes shifted from each other in the radial direction.

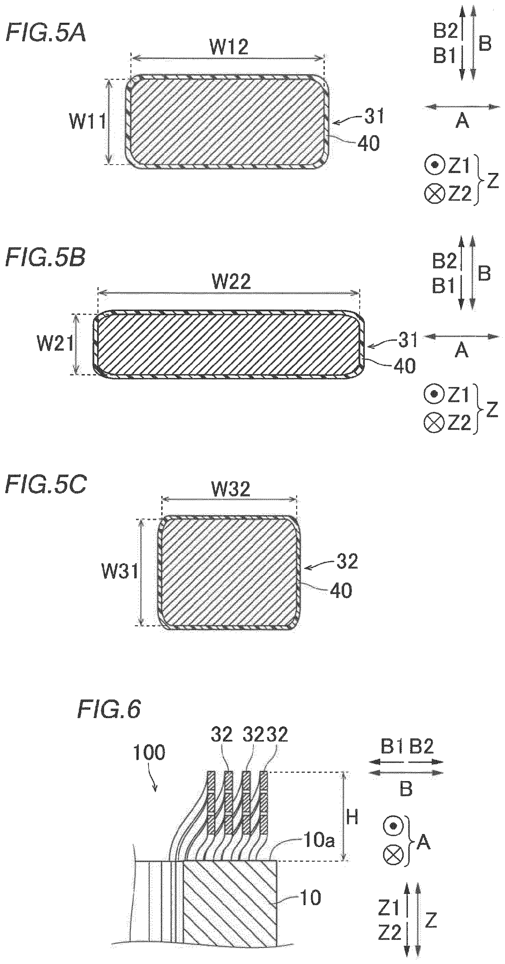

As shown in FIGS. 5A and 5B, the sectional shape of one of the pair of slot housing portions 31 and the sectional shape of the other of the pair of slot housing portions 31 are different from each other. As shown in FIG. 5A, the radial width of the cross section of one of the pair of slot housing portions 31 is W11. The circumferential width of the cross section of one of the pair of slot housing portions 31 is W12. As shown in FIG. 5B, the radial width of the cross section of the other of the pair of slot housing portions 31 is W21 different from W11. The circumferential width of the cross section of the other of the pair of slot housing portions 31 is W22 different from W12. In the example shown in FIGS. 5A and 5B, W21 is smaller than W11 and W22 is larger than W12. In this example, one of the pair of slot housing portions 31 (see FIG. 5A) is provided on the radially inner side of the other (see FIG. 5B).

As shown in FIGS. 5A to 5C, the sectional shapes of the pair of slot housing portions 31 and the sectional shape of the coil end portion 32 are different from each other. Specifically, as shown in FIG. 5C, the cross section of the coil end portion 32 has a rectangular shape including sides having a width W31 and sides having a width W32. The widths W31 and W32 are different from the widths W11, W12, W21, and W22. For example, the cross section of the coil end portion 32 has a square shape. That is, the widths W31 and W32 are substantially equal to each other in this case.

As shown in FIG. 6, heights H of the plurality of coil end portions 32 arranged in the radial direction from the end face 10a of the stator core 10 are substantially equal to each other.

### [Method for Manufacturing Stator]

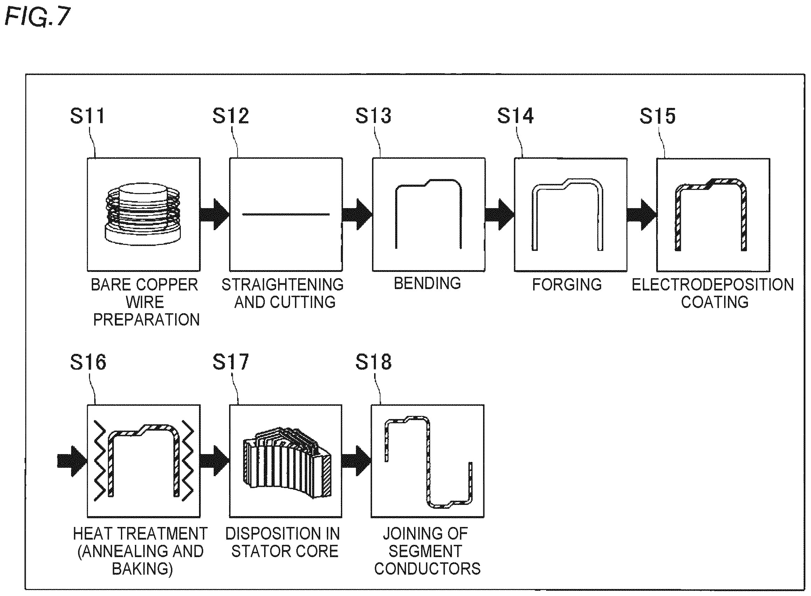

Next, a method for manufacturing the stator 100 will be described with reference to FIG. 7.

### (Preparation Step)

As shown in FIG. 7, a preparation step for a copper wire (bare copper wire having a substantially circular cross section) to be used as the segment conductor 30 is first performed in step S11. In the preparation step (S11), the copper wire is prepared, for example, in a state in which it is wound around a bobbin (in a roll state).

### (Straightening and Cutting Step)

Next, a straightening and cutting step for straightening and cutting the copper wire is performed in step S12. Specifically, the rolled copper wire is straightened in the straightening and cutting step (S12). Then, the straight copper wire is cut to the length of the segment conductor 30 (see FIG. 4).

### (Bending Step)

Next, a bending step for bending the segment conductor 30 is performed in step S13. Specifically, in the bending step (S13), the segment conductor 30 is bent by a jig into a shape (substantial U-shape) (see FIG. 4) for the disposition in the stator core 10.

### (Forging Step)

Next, a cross section forming step for forming the sectional shape of the segment conductor 30 by compressing the segment conductor 30 is performed in step S14. That is, in the present embodiment, the cross section forming step (S14) is performed after the bending step (S13). Thus, the bending step (S13) is performed before the internal stress of the segment conductor 30 increases (work hardening) due to the compression in the cross section forming step (S14). As a result, it is possible to prevent damage (cracks, etc.) to the segment conductor 30 due to the bending step (S13) performed on the segment conductor 30 in a state in which the internal stress of the segment conductor 30 increases (work-hardened state). Unlike the case where the bending step (S13) is performed after the cross section forming step (S14), annealing for removing the internal stress (work hardening) of the segment conductor 30 need not be performed before the bending step (S13). Therefore, it is possible to easily realize a heat treatment step described later (common thermal step (S16) for performing, by the same heat treatment, annealing of the segment conductor 30 for removing the internal stress (work hardening) of the segment conductor 30 and baking of the insulation coating 40).

The cross section forming step (S14) is a step of forming the sectional shape of the segment conductor 30 by forging so that the sectional shapes of the slot housing portions 31 (see FIGS. 5A and 5B) differ from the sectional shape of the coil end portion 32 (see FIG. 5C). Therefore, in the cross section forming step (S14), the sectional shape of the segment conductor 30 can easily be formed into an arbitrary sectional shape by forging. By using the forging in the cross section forming step (S14), the increase in the internal stress of the segment conductor 30 can be suppressed as compared to a case of using another method (for example, rolling) for forming the sectional shape of the segment conductor 30. As a result, the annealing temperature for annealing the segment conductor 30 can be made relatively low after the cross section forming step (S14). Since the segment conductor 30 can be formed so that the slot housing portions 31 and the coil end portion 32 have different sectional shapes, the degrees of freedom in designing the segment conductor 30 and the stator core 10 in which the segment conductor 30 is disposed can be improved as compared to a case where the sectional shape of the segment conductor 30 is uniform as a whole. In the cross section forming step (S14), the sectional shape of the segment conductor 30 is formed (transformed) by forging using a die. That is, in the method for manufacturing the stator 100, "forging" means so-called "die forging".

### (Coating Step)

Next, a coating step for applying the insulation coating 40 to the segment conductor 30 is performed in step S15. The coating step (S15) is a step of performing electrodeposition coating by immersing the segment conductor 30 in a liquid insulation coating 40. The coating step (S15) is a step of applying a thermosetting resin to the segment conductor 30 as the insulation coating 40. Specifically, the segment conductor 30 is immersed in a liquid coating in the coating step (S15). The liquid coating is a thermosetting resin. The thermosetting resin is, for example, polyimide or polyamideimide. By applying a voltage to the segment conductor 30 immersed in the liquid coating, the liquid coating is deposited on the surface of the segment conductor 30. Thus, the insulation coating 40 is formed on the surface of the segment conductor 30.

### (Heat Treatment Step)

Next, a common heat treatment step is performed in step S16 to perform, by the same heat treatment, annealing of the segment conductor 30 whose sectional shape has been formed in the cross section forming step (S14), and baking of the (liquid) insulation coating 40 applied (by electrodeposition coating) to the segment conductor 30 in the coating step (S15). That is, in the present embodiment, the common heat treatment step (S16) is performed after the cross section forming step (S14) and the coating step (S15). The common heat treatment step (S16) is performed on the segment conductor 30. Thus, the annealing of the segment conductor 30 whose sectional shape has been formed in the cross section forming step (S14) and the baking of the (liquid) insulation coating 40 applied (by electrodeposition coating) to the segment conductor 30 in the coating step (S15) can simultaneously be performed by the same heat treatment in the single common heat treatment step (S16). As a result, it is possible to prevent the number of steps from relatively increasing even in the case where the method includes the step of forming the segment conductor 30 under compression (cross section forming step (S14)) and the step of applying the insulation coating 40 to the segment conductor 30 (coating step (S15)). Unlike the case where the annealing of the segment conductor 30 and the baking of the insulation coating 40 are separately performed by separate heat treatments, a common heating apparatus can be used for performing the heat treatment. Thus, the manufacturing equipment can be prevented from becoming complicated and upsized. In the present embodiment, the common heat treatment step (S16) is a step of performing the heat treatment by using the same heating apparatus to perform the annealing of the segment conductor 30 whose sectional shape has been formed in the cross section forming step (S14) and the baking of the insulation coating 40 applied to the segment conductor 30 in the coating step (S15).

In the present embodiment, the common heat treatment step (S16) is a step of performing the heat treatment at a temperature at which the annealing of the segment conductor 30 whose sectional shape has been formed in the cross section forming step (S14) and the baking of the insulation coating 40 applied to the segment conductor 30 in the coating step (S15) can be performed. That is, in the present embodiment, the common heat treatment step (S16) is a step of performing the heat treatment by using the same heating temperature to perform the annealing of the segment conductor 30 whose sectional shape has been formed in the cross section forming step (S14) and the baking of the insulation coating 40 applied to the segment conductor 30 in the coating step (S15). Thus, both the annealing of the segment conductor 30 whose sectional shape has been formed in the cross section forming step (S14) and the baking of the insulation coating 40 applied to the segment conductor 30 in the coating step (S15) can securely be performed in the common heat treatment step (S16).

Specifically, in the present embodiment, the common heat treatment step (S16) is a step of performing the heat treatment at an annealing temperature of the segment conductor 30 that is higher than a curing temperature at which the thermosetting resin serving as the insulation coating 40 applied to the segment conductor 30 in the coating step (S15) is cured by baking. Thus, the thermosetting resin serving as the insulation coating 40 applied to the segment conductor 30 in the coating step (S15) can securely be cured by baking in the common heat treatment step (S16) at the temperature higher than the curing temperature at which the thermosetting resin is cured.

Specifically, a general annealing temperature of copper used for the segment conductor 30 is 350°Cto 500°C. However, the temperature of 350°Cto 500°Cis a temperature at which the annealing effect on copper is relatively high. Even below 350°C (for example, 300°C), there is a certain annealing effect on copper. That is, the annealing temperature of copper covers a relatively wider range than the range of 350°C to 500°C. The curing temperature of the thermosetting resin used for the insulation coating 40 is approximately 300°C and approximately 250°C in the case of, for example, polyimide and polyamideimide, respectively. The thermosetting resin such as polyimide or polyamideimide is cured at the curing temperature, but the elastic modulus decreases as the temperature increases above the curing temperature. That is, the thermosetting resin becomes more fragile against bending, stretching, or the like as the temperature increases above the curing temperature. Therefore, in the common heat treatment step (S16), it is preferable to perform the heat treatment at an annealing temperature that is higher than the curing temperature of the thermosetting resin serving as the insulation coating 40 but is not significantly higher than the curing temperature. For example, when polyimide and polyamideimide are used as the thermosetting resin, the heat treatment may be performed in the range of approximately 300°Cto approximately 350°C.

### (Coil Disposing Step)

Next, a disposing step for disposing the segment conductors 30 in the stator core 10 is performed in step S17. The disposing step (S17) is a step of housing the slot housing portions 31 of the segment conductor 30 in the slots 13 of the stator core 10 and disposing the coil end portion 32 of the segment conductor 30 outside the slots 13 of the stator core 10. In the disposing step (S17), the plurality of segment conductors 30 is disposed at predetermined positions in the stator core 10.

### (Segment Conductor Joining Step)

Next, a joining step for joining the segment conductors 30 together is performed in step S18. Specifically, the plurality of segment conductors 30 disposed at the predetermined positions in the stator core 10 in the disposing step (S17) is joined together in the segment conductor joining step (S18). Specifically, the end of the slot housing portion 31 in the segment conductor 30 disposed on the Z1 side and the end of the slot housing portion 31 in the segment conductor 30 disposed on the Z2 side are joined together in the slot 13.

### [Method for Manufacturing Stator According to Comparative Example]

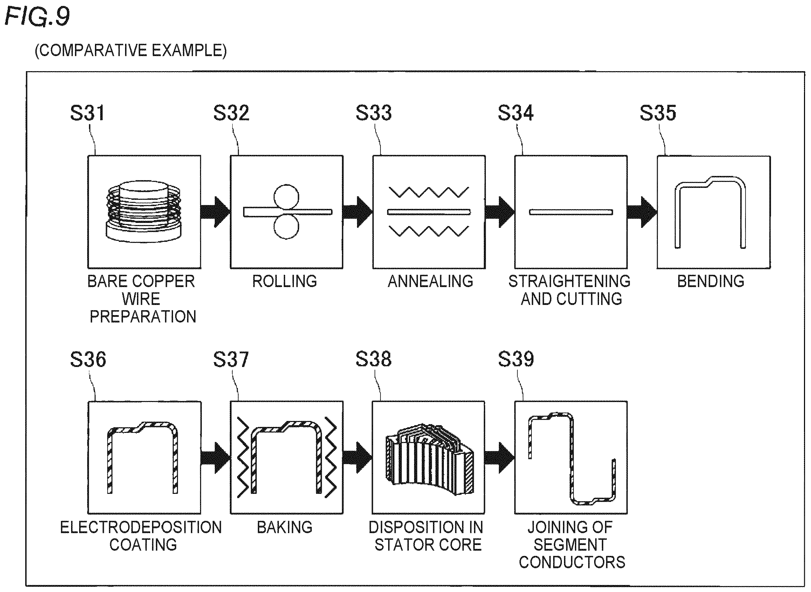

Next, a method for manufacturing a stator according to a comparative example will be described with reference to FIG. 9. Steps S31, S34, S35, S36, S38, and S39 are substantially the same as steps S11, S12, S13, S15, S17, and S18 in the above embodiment, respectively, and therefore description thereof will be omitted.

### (Rolling Step)

As shown in FIG. 9, a rolling step for rolling a copper wire used as the segment conductor 30 is performed in step S32. In the rolling step (S32), the copper wire is compressed by rolling to form the sectional shape of the copper wire.

### (Annealing Step)

Next, an annealing step for annealing the copper wire is performed in step S33. In the annealing step (S33), the copper wire is annealed to remove a residual stress (work hardening) inside the copper wire due to the compression in the rolling step (S32).

### (Baking Step)

A baking step for baking the (liquid) insulation coating 40 applied (by electrodeposition coating) to the segment conductor 30 is performed in step S37. In the baking step (S37), the (liquid) insulation coating 40 applied (by electrodeposition coating) to the segment conductor 30 is thermally cured by baking. Thus, the insulation coating 40 is formed on the surface of the segment conductor 30.

As described above, in the method for manufacturing the stator according to the comparative example, the annealing step (S33) and the baking step (S37) are performed separately. Therefore, the number of steps increases as compared to the method for manufacturing the stator 100 according to the present embodiment. Unlike the method for manufacturing the stator 100 according to the present embodiment, it may be necessary to provide both a heating apparatus for the annealing step (S33) and a heating apparatus for the baking step (S37). In the method for manufacturing the stator 100 according to the present embodiment, the annealing of the segment conductor 30 and the baking of the insulation coating 40 are simultaneously performed in the common heat treatment step (S16). Therefore, it is possible to prevent the number of steps from relatively increasing and to use the common heating apparatus for the heat treatment.

### [Modifications]

The embodiment disclosed herein should be construed as illustrative and not restrictive in all respects. The scope of the present invention is defined by the claims rather than by the above description of the embodiment, and includes all changes (modifications) that fall within the meaning and scope equivalent to the claims.

For example, the above embodiment is directed to the example in which the coating step (S15) is the step of performing the electrodeposition coating by immersing the segment conductor 30 (coil portion) in the liquid insulation coating 40. However, the present invention is not limited to this example. In the present invention, the coating step may be a step of applying the insulation coating to the coil portion by a method other than the electrodeposition coating (for example, powder coating, tape application, spraying, or application).

The above embodiment is directed to the example in which the cross section forming step (S14) is the step of forming the sectional shape of the segment conductor 30 (coil portion) by forging so that the sectional shapes of the slot housing portions 31 differ from the sectional shape of the coil end portion 32. However, the present invention is not limited to this example. In the present invention, the cross section forming step may be a step of forming the sectional shape of the coil portion by forging so that the sectional shapes of the slot housing portions are the same as the sectional shape of the coil end portion.

The above embodiment is directed to the example in which the cross section forming step (S14) is the step of forming the sectional shape of the segment conductor 30 (coil portion) by forging. However, the present invention is not limited to this example. In the present invention, the cross section forming step may be a step of forming the sectional shape of the coil portion by a method for forming the coil portion under compression (for example, rolling) other than the forging.

The above embodiment is directed to the example in which the common heat treatment step (S16) is the step of performing the heat treatment at the annealing temperature of the segment conductor 30 (coil portion) that is higher than the curing temperature at which the thermosetting resin serving as the insulation coating 40 applied to the segment conductor 30 (coil portion) in the coating step (S15) is cured by baking. However, the present invention is not limited to this example. In the present invention, the common heat treatment step may be a step of performing the heat treatment at an annealing temperature of the coil portion that is equal to the curing temperature at which the thermosetting resin serving as the insulation coating applied to the coil portion in the coating step is cured by baking.

The above embodiment is directed to the example in which the "coil portion" in the claims is each of the plurality of segment conductors 30 constituting the coil portion 20 provided in the stator 100. However, the present invention is not limited to this example. In the present invention, the "coil portion" in the claims may be the coil portion provided in the stator.

The above embodiment is directed to the example in which the slot housing portions 31 of the different segment conductors 30 are joined together in the slot 13. However, the present invention is not limited to this example. In the present invention, the slot housing portions of the different segment conductors may be joined together outside the slot.

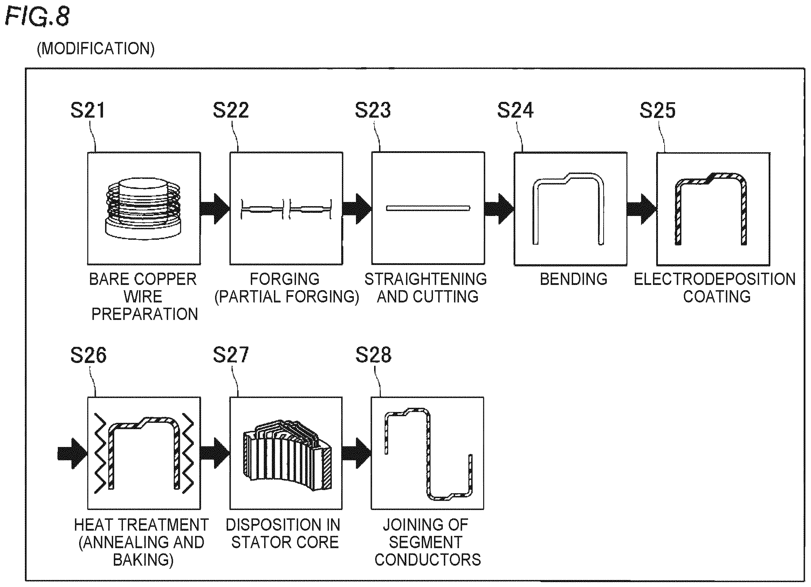

The above embodiment is directed to the example in which the cross section forming step (S14) is performed after the bending step (S13). However, the present invention is not limited to this example. In the present invention, as in a modification shown in FIG. 8, the "cross section forming step" may be performed before the "bending step" by changing the "cross section forming step" to a partial forging step for performing partial forging on a forging target. Specifically, as shown in FIG. 8, the cross section forming step (S22) is performed after the preparation step (S21) and before the straightening and cutting step (S23) and the bending step (S24). In the cross section forming step (S22), the sectional shape is formed at a part that is not bent in the bending step (S24) (for example, a part serving as the slot housing portion 31) in the copper wire prepared in the preparation step (S21). That is, the cross section forming step (S22) is a step performed on the part of the segment conductor 30 (coil portion) that is not bent in the bending step (S24). As a result, the part where the internal stress has increased by forming the sectional shape in the cross section forming step (S22) is not bent in the bending step (S24). Thus, it is possible to prevent damage (cracks, etc.) to the segment conductor 30 (coil portion) similarly to the above embodiment even though the cross section forming step (S22) is performed before the bending step (S24). Steps S21, S23, S24, S25, S26, S27, and S28 are substantially the same as steps S11, S12, S13, S15, S16, S17, and S18 in the above embodiment, respectively, and therefore description thereof will be omitted.

### Description of the Reference Numerals

10 ... stator core, 13 ... slot, 20 ... coil portion, 30 ... segment conductor (coil portion), 31 ... slot housing portion, 32 ... coil end portion, 40 ... insulation coating, 100 ... stator

## Claims

1. A method for manufacturing a stator including a stator core and a coil portion disposed in the stator core, the method comprising:
a cross section forming step for forming a sectional shape of the coil portion by compressing the coil portion;
a coating step for applying an insulation coating to the coil portion;
a common heat treatment step for performing, after the cross section forming step and the coating step, by the same heat treatment, annealing of the coil portion whose sectional shape has been formed in the cross section forming step and baking of the insulation coating applied to the coil portion in the coating step; and
a disposing step for disposing the coil portion in the stator core after the common heat treatment step.

2. The method for manufacturing the stator according to claim 1, wherein the common heat treatment step is a step of performing the heat treatment at a temperature at which the annealing of the coil portion whose sectional shape has been formed in the cross section forming step and the baking of the insulation coating applied to the coil portion in the coating step are performable.

3. The method for manufacturing the stator according to claim 2, wherein
the coating step is a step of applying a thermosetting resin to the coil portion as the insulation coating, and
the common heat treatment step is a step of performing the heat treatment at an annealing temperature of the coil portion that is higher than a curing temperature at which the thermosetting resin serving as the insulation coating applied to the coil portion in the coating step is cured by the baking.

4. The method for manufacturing the stator according to any one of claims 1 to 3, wherein
the coil portion includes a segment conductor including a pair of slot housing portions to be housed in different slots of the stator core and a coil end portion connecting the pair of slot housing portions, and
the common heat treatment step is performed on the segment conductor.

5. The method for manufacturing the stator according to claim 4, further comprising
a bending step for bending the segment conductor, wherein
the cross section forming step is performed after the bending step.

6. The method for manufacturing the stator according to claim 4, further comprising a bending step for bending the segment conductor, wherein
the cross section forming step is performed, before the bending step, on a part of the segment conductor that is not bent in the bending step.

7. The method for manufacturing the stator according to any one of claims 1 to 6, wherein the common heat treatment step is a step of performing the heat treatment by using the same heating apparatus to perform the annealing of the coil portion whose sectional shape has been formed in the cross section forming step and the baking of the insulation coating applied to the coil portion in the coating step.

8. The method for manufacturing the stator according to any one of claims 1 to 7, wherein the common heat treatment step is a step of performing the heat treatment at the same heating temperature to perform the annealing of the coil portion whose sectional shape has been formed in the cross section forming step and the baking of the insulation coating applied to the coil portion in the coating step.
